(19) Europäisches Patentamt / European Patent Office / Office européen des brevets

(11) **EP 4 383 138 A1**

(12) **EUROPEAN PATENT APPLICATION**

(43) Date of publication:
**12.06.2024 Bulletin 2024/24**

(21) Application number: **22211466.2**

(22) Date of filing: **05.12.2022**

(51) International Patent Classification (IPC):
*G06N 5/045* $^{(2023.01)}$

(52) Cooperative Patent Classification (CPC):
**G06N 5/045; G06N 20/00;** G06N 3/0442;
G06N 3/0455; G06N 3/0464; G06N 3/047;
G06N 3/0475; G06N 5/01

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft 80333 München (DE)**

(72) Inventors:
• **LEBACHER, Michael 84513 Töging am Inn (DE)**
• **FRITZ, Cornelius 80798 München (DE)**

(74) Representative: **Siemens Patent Attorneys Postfach 22 16 34 80506 München (DE)**

(54) **LOCAL AND GLOBAL INTERPRETABLE EXPLANATION MACHINE LEARNING MODEL FOR EXPLAINING AN OUTPUT OF AN ANALYSIS MODEL ANALYZING A MACHINE**

(57) Computer-implemented method for training a local and global interpretable explanation model for explaining an output of an analysis model ($f(.)$) analyzing a machine, comprising

- receiving (S1) a multitude of datapoints ($x_i$) and associated label ($y_i$), outputted by the analysis model $f(.)$) for the datapoint ($x_i$), the datapoint ($x_i$) comprising multivariate sensor data collected at the machine, each datapoint is structured as a multi-dimensional vector and each element of the vector ($x_{ij}$) representing a feature ($\theta_{i,j}$) of the machine,

- establishing (S2) the explanation model ($\tilde{f}(.)$) structured as generalized additive mixed model GAMM, wherein each additive component of the explanation model ($\tilde{f}(.)$) represents a different feature ($\theta_{i,j}$) of the machine,

- training (S3) the generalized additive mixed model by a weighted restricted maximum likelihood approach resulting in a trained explanation model $\tilde{f}(x_i)$), wherein the trained explanation model ($\tilde{f}(x_i)$) provides

a local importance of each feature ($\theta_{i,j}$) at a dedicated datapoint ($x_i$), and

a global importance of each feature ($\theta_{i,j}$) based on a variance of a partial dependence plot (11) or a variance of a partial derivative plot (13) for the feature ($\theta_{i,j}$), and

- outputting (S4) the trained explanation model ($\tilde{f}(x_i)$) to an assistance apparatus which uses the explanation model to monitor the machine.

**FIG 1**

| Step | |
|------|------|
| $(x1, y1), ..., (xi, yi), ...$ | S1 |
| $\widetilde{f}(.)$ | S2 |
| | S31 |
| | S32 |
| | S33 — S3 |
| | S34 |
| | S35 |
| Out $\widetilde{f}(x_i)$ | S4 |

EP 4 383 138 A1

**Description**

Independent of the grammatical term usage, individuals with male, female or other gender identities are included within the term.

The present disclosure relates to a computer-implemented method for training a local and global interpretable explanation machine learning model for explaining an output of an analysis model analyzing a machine, a computer-implemented method for controlling the machine, a respective apparatus and respective computer program products.

Nowadays, sensors are omnipresent in all kinds of heavy machinery, in devices of manufacturing plants. One especially important application field of sensors is monitoring the functionality of heavy machinery such as pumps, turbines, die casting machines etc. To do so, sensors are installed on these devices and machines and measure different physical parameters such as electrical current, temperature, pressure over time which enables monitoring of the state of the entire system. Operation monitoring and quality monitoring are performed by data-driven applications using machine learning models for anomaly detection and/or classifying the detected anomalies into dedicated anomaly/fault classes. If the machinery is subject to different damages, the sensor data values typically show unusual, suspicious patterns and anomalies in the data which allow to learn machine learning models for detecting these anomalies. Sensor data are also used for quality monitoring of products manufactured by a manufacturing device, like a robot or an additive manufacturing machine in a manufacturing plant.

However, there are multiple problems related to detecting anomalies and subsequently failures of the machine from sensor data. Since the status of the machine often depends on various physical parameters and especially depends on combinations of specific parameters, the machine learning model is of complex structure because it has to be trained taking into account time series of sensor data representing all of the various parameters. Further, such learned machine learning (ML) models are called black-box models and are the "logic" behind the provided result is often not transparent and human-understandable. This means that it is not possible to understand the global behavior of the model, i.e., how does the model itself process data in general, and to understand locally how the machine learning model behaves, e.g., how a certain prediction based on specific input data was made by the machine learning model. Throughout this document a model is to be understood as being a machine learning model.

These local and especially global understanding are required to optimize a machine learning model and to provide more accurate output for a variety of input data, especially for sensor data the machine learning model was not trained on. Further, lack on global and local understanding of the machine learning model leads to problems determining rootcauses of detected anomalies and consequently to a lack of trust and acceptance from user side. In operational use, e.g., using the machine learning model for anomaly detection, without knowing the root-cause of the anomaly, an operator of the technical system is merely able to take counter measures or to decide on how to react on such anomalies. Therefore, the local and global explanation is often of much more critical importance than a high accuracy to provide a human-understandable explanation how the model decided on outputting an anomaly. Although this is crucial, the requirement of explainability is not satisfied by standard anomaly detection models.

An explanation of the model is gained by approximating the behavior of the mode. Currently, different explanation approaches are used for providing a local explanation than for providing the global explanation. These different explanation approaches are based on different assumptions which lead to inconsistent results between the local explanation of the model for a dedicated input datapoint and the explanation of the global behavior of the model.

Therefore, it is the object of the present application to provide an apparatus and method that provides consistent explanations of both the global and the local behavior of the complex but untransparent model.

This object is solved by the features of the independent claims. The dependent claims contain further developments of the invention.

A first aspect concerns a computer-implemented method for training a local and global interpretable explanation machine learning (ML) model for explaining an output of an analysis model analyzing a machine, comprising the steps:

- receiving a multitude of datapoints and associated predicted labels which were output by the analysis model for the datapoint, the datapoint comprising multivariate sensor data collected at the machine, each datapoint is structured as a multi-dimensional vector and each element of the vector representing a feature of the machine,
- establishing the explanation model structured as generalized additive mixed model (GAMM), wherein each additive component of the explanation model represents a different feature of the machine,
- training the generalized additive mixed model by a weighted restricted maximum likelihood approach resulting in a trained explanation model, wherein the trained explanation model provides a local importance of each feature at a dedicated datapoint, and
  a global importance of each feature based on a variance of a partial dependence plot and/or a variance of a partial derivative plot for the feature, and
- outputting the trained explanation model to an assistance apparatus which uses the explanation model to monitor the machine.

The proposed method provides an explanation model based on a single explanation framework having a common set of assumptions which provides local explanations which are precisely derived from the global explanations of the analysis model. Applied on analyzing the machine, the trained explanation model provides not only reliable information on the local importance, e.g., on the at least one feature/parameter causing the anomaly predicted by the analysis model at the dedicated input datapoints, but also shows how the output of the analysis model will change if the input datapoints change. For example, if unexpected or strange behavior is observed in the output of the analysis model at single datapoints, e.g., the analysis model outputs always an anomaly for a dedicated sensor, the global importance provides information whether the analysis model is too sensitive with respect to the dedicated sensor. The trained explanation model provides a trigger for refining the analysis model, e.g., by new training of the analysis model with adapted training data. This reduces a high rate of false-positive results of the analysis model.

In an embodiment of the method, the analysis model is a classification model outputting a probability for a dedicated class the machine is operating in depending on sensor data input to the analysis model, or the analysis model is a regression model outputting a pre-diction for datapoints relevant for an operation state of the machine.

Therefore, the method is very flexible with respect to application scenarios. The classification model outputs a specific class. E.g., the classification model trained to work as Anomaly detector outputs that the analyzed machine is working "normal" or "abnormal". In case of a multi-class classification model, it outputs that the machine is working abnormal due to a "specific failure" out of several different failure. The regression model outputs for example anomalies of the machine, e.g., predicting sensor values or estimation of soft sensor values relevant for anomalies.

According to a further embodiment of the method, the analysis model is a Random Forest, a Gradient Boosted Tree or Isolation Forest, or the analysis model is a Deep Neural Network, especially a Long short-term memory LSTM, a Convolutional Neural Network CNN, a Recurrent Neural Network RNN, a Variational Autoencoder or a Convolutional Autoencoder.

The explanation model can be applied to a wide range of models, and such it can provide explanation for wide range of AI-based applications.

According to a further embodiment of the method, the training of the explanation model comprises the steps:

- determining distributional properties of the multitude of datapoints,
- parametrizing a distribution with the estimated distributional properties,
- generating for each received datapoint a predefined number of synthetic datapoints randomly sampled according to the parametrized distribution, each synthetic datapoint being a multi-dimensional vector providing a random draw for each element of the vector,
- determining a weight for each synthetic datapoint depending on a distance between the received datapoint and the synthetic datapoint,
- training the explanation model by the weighted maximum likelihood approach depending on the weighted contribution of the synthetic datapoints to a log-likelihood according to the restricted maximum likelihood procedure (REML).

The synthetic datapoints generated from the parametrized distribution represent a close approximation of the received datapoints whereby providing a realistic variation around the received datapoint. The determined weight increases the impact of synthetic datapoints located close to the received datapoints in the applied restricted maximum likelihood procedure. The generation of the synthetic datapoints in the described way reduces the required processing capacity. The explanation model structured as a generalized additive mixed model and trained by the weighted maximum likelihood approach is basis for providing the local and global explanation with only one model, i.e., the explanation model. The described explanation model provides an optimized method with respect to processing capacity and processing time for outputting a local and global explanation.

According to a further embodiment of the method, distributional properties of the multitude of datapoints are estimated by determining a mean and variance-covariance matrix of the multitude of received datapoints.

Mean matric and variance-covariance matrices can be calculate time efficiently optimizing the processing time for training the explanation method.

According to a further embodiment of the method, the distribution is a multivariate normal distribution.

This provides an appropriate distribution appropriate for data from a wide area of applications and has to be adapted in only few cases. The distribution and such the training approach can be applied unchanged for many application scenarios.

A second aspect concerns a computer-implemented method for monitoring a machine, comprising the steps:

- receiving at least one collected datapoint comprising multivariate sensor data collected at the machine, each datapoint is structured as a multi-dimensional vector and each element of the vector representing a feature of the machine,

- estimating an operating state of the machine for the collected datapoint by the output generated by an analysis model with the collected datapoint as input,

- inputting the at least one collected datapoint into an explanation model trained according to claims 1-7,

- outputting a local importance of at least one feature at the received datapoint, and/or a global importance of at least one feature for evaluating and adapting at least one setting of the machine depending on the features with the highest local importance.

The datapoints are measured preferably by sensors during operation of the machine. The method provides a comprehensive explanation of the output of the analysis model for the machine at the collected datapoint. An adaption of settings or other parameters influencing the operation of the analyzed machine at the collected datapoint can be derived from the local but also the global importance of the analyzed features provided for the considered collected datapoint. Wherein the local importance provides information on the features of the dedicated collected datapoint, the global importance provides further indication on the influence of the features at adjacent datapoints.

According to a further embodiment of the method comprises the additional steps of determining a mismatch of the output global importance of at least one feature of the explanation model with the actual output of the analysis model and/or expected behavior of the machine with respect to the at least one feature, and

- re-training the analysis model with new training data which represent the actual and/or expected behavior of the machine with respect to the at least one feature,
- exchange the analysis model by the re-trained analysis model, and
- estimate the operating state of the machine by the re-trained analysis model.

The global importance provides a measure to evaluate the quality of the analysis model and is used as indication for a refinement of the analysis model. Therefore, the analysis machine learning model can be fast and continuously optimized and applied to evaluate measured sensor data of the technical system.

According to a further embodiment of the method, the machine is one of a device in a manufacturing plant, especially a printer in an additive manufacturing plant, a device of an distribution system, a drive unit of a train or a machine in heavy industry, especially a pump, a turbine, a casting machine.

A third aspect concerns an assistance apparatus for monitoring a machine, comprising:

- a data interface configured to receive at least one collected datapoint comprising multivariate sensor data collected at the machine, each collected datapoint is structured as a multi-dimensional vector and each element of the vector representing a feature of the machine,
- an estimator unit configured to estimate an operating state of the machine for the collected datapoint by an output ($y_k$) generated by an analysis model with the at least one received datapoint as input,
- an explanation unit configured to input the at least one collected datapoint into an explanation model trained according to claims 1-7, and
- a user interface configured to output a local importance of at least one feature at the collected datapoint, and/or a global importance of at least one feature or evaluating and adapting the at least one setting of the machine depending on the features with the highest local importance.

According to a further embodiment, the assistance apparatus comprises a control unit configured to adapt at least one setting of the machine depending on the features with the highest local importance.

A fourth aspect concerns a computer program product directly loadable into the internal memory of a digital computer, comprising software code portions for performing the steps of the method for training the local and global interpretable explanation model as described above when said product is run on said digital computer.

A fifth aspect concerns a computer program product directly loadable into the internal memory of a digital computer, comprising software code portions for performing the steps of the method for monitoring a machine, as described above, when said product is run on said digital computer.

Various kinds and types of machines can be considered. Examples include, e.g., factory equipment, e.g., manufacturing apparatuses, robots, or assembly line devices. Further examples include power plants or transmission networks, e.g., turbines or generators, substation equipment. Examples include mobility infrastructure equipment, e.g., people mover, automated escalators, lifts, etc. Further examples include heavy machinery such as pumps, turbines, die casting machines, etc. Further examples include vehicles, e.g., cars, locomotives, airplanes, or ships.

The invention will be explained in more detail by reference to accompanying figures. Similar objects will be marked by the same reference signs.

Figure 1   illustrates an embodiment of the inventive computer-implemented method for training an explanation model by a flow diagram.

Figure 2   schematically illustrates an embodiment of the generated synthetic datapoints as a table.

Figure 3   schematically illustrates an embodiment of the output of the trained explanation machine learning model.

Figure 4   schematically illustrates an embodiment of the inventive computer-implemented method for monitoring of a machine by a flow diagram.

Figure 5   schematically illustrates an embodiment of an assistance apparatus.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method. In the same way, each functional step described for a method can be performed in a functional unit of the related apparatus.

Sensors are omnipresent in all kinds of technical systems, like manufacturing devices, equipment in distribution systems and heavy machinery.

One especially important application field of sensors is monitoring the functionality of machines, especially of a device in a manufacturing plant, e.g., a robot, an additive manufacturing printer, or a device of a distribution system or any kind of heavy machinery like a pump, a mill, a casting machine or a machine of a mechanical or electrical drive. Sensors are installed on the machine and measure different physical parameters such as e.g., current, temperature, pressure, vibration frequency over time, providing multivariate time series of measured sensor data. AI algorithms based on machine learning models are trained to analyze these sensor data of the machine. In the following, such models are called analysis models. The measured parameters often show complex time course and even more complex interrelations. In consequence the learned machine learning models are complex and the provided result is not comprehensible, often called black-box algorithms. This means that it is not possible to understand how the model behaves globally, i.e., how the trained machine learning model itself does process data in general, and locally, i.e., how a certain prediction was made.

There exists an abundance of human-interpretable anomaly detection algorithms and statistical models such as Nelson Rules consisting of a set of 8 human-interpretable rules to detect whether sensors are out of control, or threshold-based algorithms, whether the sensors need to stay within certain bands that are either fixed or based on statistical testing theory, or statistical processes, i.e., modelling the behavior of sensors based on interpretable stochastic processes as for example autoregressive Gaussian processes, and many more. All of them have the drawback that they are limited in their ability to capture complicated data structure, their ability to generalize and their robustness to new data structures and outliers. Hence, they are often too simplistic for the complex nature of multivariate sensor data.

In order to provide a robust algorithm with high performance and able to deal with high amounts of complex and multiple sensor data, ensemble methods, e.g., Random Forest, Gradient Boosted Trees, and Deep neural networks were designed. Those algorithms are so called black-box algorithms, meaning that it is not human-understandable how they come to the decision whether an anomaly is outputted. In order to improve on these aspects model-agnostic algorithms, i.e., approaches working with any Black-Box model, have been developed to achieve interpretability. Examples of methods providing local explanation are LIME, a simple local additive approximation of the complicated model, and SHAP providing simple and additive explanations for local instances. Examples of methods providing Global explanations are Partial Dependence Plots, showing the partial influence of selected features on the output, or permutation feature importance, showing the partial importance of selected features.

While those models are intended to provide either local OR global explanations all of them lack on the ability to give a consistent local AND global explanation and they have many deficits in providing the explanation in a human-interpretable way. Even more important in the context of this innovation disclosure, all these methods fail to consistently relate the global and the local perspective. Such a consistent local and global explanation model allows better interpretation of the output of a complex analysis model. The complex analysis model provides an accurate output, e.g., with respect to the classifying into a failure class or providing a failure value, but without being interpretable, e.g., which parameter, synonymously called feature, of the sensor data had the main impact to the output at a specific datapoint of the sensor data and whether this output is consistent with the overall behavior of the machine.

The proposed computer-implemented method and assistance apparatus provides a flexible and robust explanation model which outputs a consistent local and global explanation for the behavior of the complex analysis machine learning model. The trained explanation model provides comprehensive information on the parameters / features of the monitored machine, which provide a basis for adapting the machine to overcome the anormal state. The proposed method and assistance apparatus is generic and not limited to the usage of anomaly detection but also works for any kind of Machine Learning models based on classification and regression models. The proposed explanation model provides not only a local and global importance of the analysis model which is based on the same assumptions but requires less processing capacity and provides the output in short time, i.e., time optimized. Thus, the output of the explanation model enables to identify measures faster and more precisely to fix a failure of the machine.

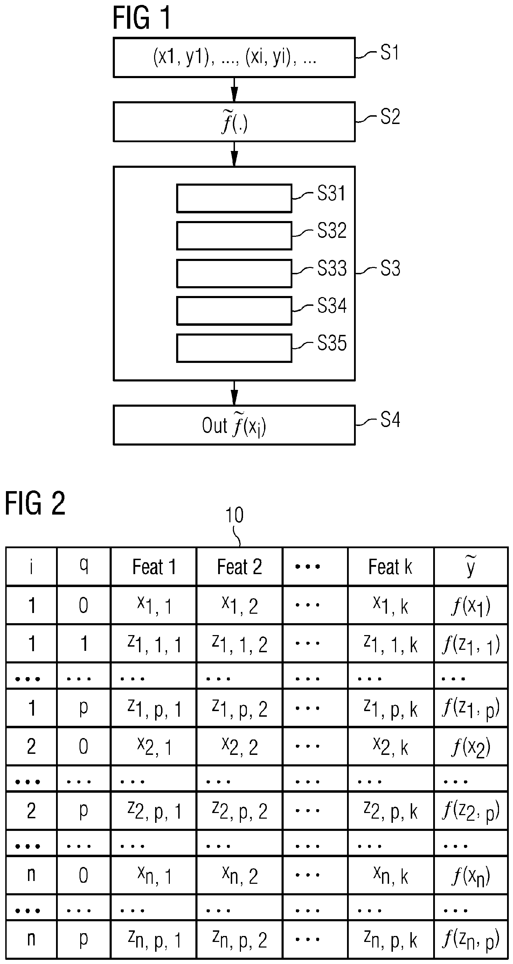

Fig. 1 shows a flow chart of the steps of the proposed computer-implemented method to train such a local and global explanation model which provides information explaining an output of an analysis model analyzing a machine. The analysis model is trained, e.g., to detect anomalies or faults of the monitored machine for predicting maintenance of the machine and similar more.

In a first step S1, a multitude of datapoints $x_i$ and associated label $y_i$ are received. Each datapoint $x_i$ comprises multivariate sensor data collected at the machine. Each datapoint $x_i$ is structured as a multi-dimensional vector and each element of the vector $x_{ij}$ represents a feature of the machine. Features are physical parameter measured by one sensor, e.g., pressure, temperature, or parameters derived from a combination of measured parameters. The label yi is generated by the analysis model for the datapoint $x_i$ as input. The analysis model itself is trained by sensor datapoints measured at the machine and labels assigned to them, e.g., assigned by an expert. Thus, the explanation model $\tilde{f}(.)$ is derived from the output of the analysis model and such approximates this specific analysis model.

In step S2 the explanation model $\tilde{f}(.)$ is established. The explanation model $\tilde{f}(.)$ is structured as generalized additive mixed model (GAMM), wherein each additive component of the explanation model represents a different feature of the machine. In next step S3, the generalized additive mixed model $\tilde{f}(.)$ is trained by a weighted restricted maximum likelihood approach resulting in a trained explanation model $\tilde{f}(x_i)$. The trained explanation model $\tilde{f}(x_i)$ provides a local importance of each feature at a dedicated datapoint $x_i$, and a global importance $I_j$ of each feature based on a variance of a partial dependence plot or a variance of a partial derivative plot for the feature. In step S4, the trained explanation model is output, e.g., to an assistance apparatus which uses the explanation model to monitor the machine.

The explanation model is derived as follows:
The following problem is assumed. Given a matrix of sensor datapoints $x = (x_1,...,x_n)$ of dimension $(n \times k)$ and associated

labels $y = (y_1,...,y_n)$, we want to learn a function f: $f\colon \mathbb{R}^k \to \mathbb{R}^k$ that outputs a probability for a failure or a type of failure. In case of classification, it holds that $y_i \in C$ and $y_i \in C$ being a set of different classes. E.g., $c_1$='no failure', $c_2$='slight anomaly', $c_3$='severe failure', etc. we have $f_{c_k}(x_i) = P(y_i = c_k)$. In case of a regression, we have $f(x_i) = y_i$. Both cases are interchangeable in the sense that they output a real-valued number.

Since the method outlined here is model-agnostic it is not restricted to any classifier or regression model, the analysis model and/or explanation model can be a Deep Neural Network DNN for a supervised approach, e.g., DNN Classifier such as Long short-term memory LSTM, a Convolutional Neural Network CNN, a Recurrent Neural Network RNN if labels are available. The analysis model f(.) and/or explanation model can be an Autoencoder such as Variational Autoencoders or Convolutional Autoencoders if no labels are available, a Random Forest, a Gradient Boosted Tree or Isolation Forest, for an unsupervised approach or any other suitable classification machine learning method that outputs a predicted class label or a suitable regression machine learning model that outputs an anomaly score, an anomaly probability or a real-valued number.

Hence, one is free to choose any model that satisfies all subpoints above. The only restriction comes with the fact that we require x to be human-interpretable (as always with each explanation algorithm including all algorithms outlined in Section 2) but even this constraint can be relaxed as we will see below.

To build a consistent local-global perspective, first the local perspective is considered. Local additive explanation methods postulate, that a model f(.) can locally, i.e., at a fixed point be explained via an additive model:

$$f_i(z) \approx \theta_{i,0} + \sum_{j=1,...,k} z_j \theta_{i,j} \; for \; z \approx x_i$$

Hence, if we want to explain $n$ datapoints, this results in $n$ models $\{f_i\}_{i=1,...,n}$. This would be a standard LIME or SHAP approach.

Here it is proposed to unify these n independent local models into one global model by defining

$$\theta_{i,0} = \theta_0 \ \forall i = 1, \dots, n$$

$$\theta_{i,j} = \left(g_j(x_i) + \theta_{i,j}^*\right) \ \forall i = 1, \dots, n, \forall j = 1, \dots, k$$

Further, we assume that $\theta^*_{i,j}$ is an observation and feature dependent random effect, following a normal distribution

$$\theta_{i,j}^* \sim N\left(0, \sigma_{i,j}^2\right) \quad \forall i = 1, \dots, n, \forall j = 1, \dots, k$$

The function $g_j(x_i)$ is assumed to be a continuous smooth function with expectation zero over all observations:

$$E_X\left[g_j(X_{i,j})\right] = 0 \ \forall j = 1, \dots, k$$

To estimate these functions, Splines are used as basic functions that are penalized (P-Splines). Together this results in the following global explanation model

$$f(x_i) = \theta_0 + \sum_{j=1,\dots,k} \left(g_j(x_{i,j}) + \theta_{i,j}^*\right)x_{i,j} \quad (1)$$

Each of the additive components $\left(g_j(x_{i,j}) + \theta_{i,j}^*\right)x_{i,j}$ represents a different feature j of the datapoints and the machine respectively.

This model $f(x_i)$ according to (1) can be interpreted as a generalized additive mixed model (GAMM) which is estimated with the (Di,q)- weighted restricted maximum likelihood (REML) algorithm. To do so, it is necessary to define the conditional distribution $y_i|x_i$ which is normal in case of regression or Binomial in case of classification.

A trained explanation model $f(x_i)$ approximates the analysis model $f(x_i)$

$$\tilde{f}(x_i) = \theta_0 + \sum_{j=1,\dots,k} \left(g_j(x_{i,j}) + \theta_{i,j}^*\right)x_{i,j} \approx f(x_i)$$

is estimated, i.e., trained comprises as a first step S31, see Fig.1, by determining distributional properties of the multitude of datapoints $(x_i)$. Distributional properties of the multitude of datapoints $x_i$ are estimated by determining a mean and variance-covariance matrix $\Sigma$ of the multitude of received datapoints $x_i$. A distribution $N(.,\Sigma)$ is parametrized with the estimated distributional properties, see S32. Preferably, the distribution in $N(x_i,\Sigma)$ is a normal distribution. To generate further training datapoints a predefined number (p) of synthetic datapoints $(z_{i,1},\dots,z_{i,p})$ are randomly sampled according to the parametrized distribution, see step S33. Each synthetic datapoint $z_{i,q} = (z_{i,q,1}, \dots, z_{i,q,j}, \dots, z_{i,q,k})$ is a multi-dimensional vector providing a random draw for each element j of the vector.

For each synthetic datapoint a weight is determined depending on a distance between the received datapoint $x_i$ and the synthetic datapoint $z_i$, see step S34. E.g., the weight is determined to exponentially decrease with the distance between the training datapoints $x_i$ and training datapoints $z_i$.

The explanation model $f(x_i)$ is trained by a weighted maximum likelihood approach, optimizing a loss function $L(\theta)$ resulting in the trained explanation function. The weighted maximum likelihood approach depends on the weighted contribution of the synthetic datapoints to a log-likelihood according to the restricted maximum likelihood procedure (REML).

In detail, to estimate local random effects and to obtain a local interpretation, like classical local methods the following algorithm is proposed to create the synthetic datapoints $z_i$ needed to make the explanation model according to (1) identifiable and estimable:

- Calculate a Variance Covariance Matrix $\Sigma$ of $x$

- For i in 1 to n:

  ◦ Draw p points from $N(x_i, \Sigma)$ to obtain $z_i = (z_{i,1}, \ldots, z_{i,p})$

  ◦ Calculate the distance between $x_i$ and $z_{i,q}$ for $q = 1, \ldots, p$ with a kernel $D_{i,q}$ e.g. via $D_{i,q} = e^{-\frac{(x_i - z_{i,q})^T (x_i - z_{i,q})}{2\eta}}$,

  ◦ save those distances in in $d = (d_{i,1}, \ldots, d_{i,p})$
  ◦ Save z and d together with the index $i$

This results in a data matrix 10 of datapoints $x_i$ and additional synthetic datapoints $z_i$ as shown in Fig. 2. Each received datapoint $x_i$ is contained in a line marked in column with "i" = i and "q" = 0, wherein each feature of the received datapoint and also the synthetic datapoint is structured as a vector $x_i$ with elements representing the features, in Fig. 2 named Feat1, Feat2,.., Featk. The last column $\tilde{y}$ contains the label assigned to the received datapoint $x_i$, i.e., the label which was received with datapoint $x_i$ and the label assigned to the synthetic datapoint $z_{1,1}$, which is the output of the analysis model for synthetic datapoint $z_{1,1}$ as input, respectively. The synthetic datapoint $z_{i,1..p}$ drawn for datapoint $x_i$ is contained in the lines with the respective value in column $i,q$ of the matrix shown in Fig.2.

Using this received datapoints and synthetic datapoints with p>1 as data input allows to identify model (1). The random effects are estimable with respect to the index $i$ and the smooth functions are evaluated at $x_{i,j}$.

Then, the local interpretation for each i=1,...,n we can interpret

$$\tilde{f}(x_i) = \theta_0 + \sum_{j=1,\ldots,k} \left( g_j(x_{i,j}) + \theta_{i,j}^* \right) x_{i,j}$$

as

$$\tilde{f}(z_i) = \theta_0 + \sum_{j=1,\ldots,k} \theta_j z_{i,j} \quad (2)$$

being an additive local explanation method.

Globally, we can interpret

$$g_j(x_{i,j}) x_{i,j} \forall j = 1, \ldots, k$$

as global partial dependence plots, that are consistent with the local interpretation (2) and

$$g_j(x_{i,j}) \forall j = 1, \ldots, k$$

provides the global partial derivative plots, consistent with the local interpretation (2).

A global importance of the analysis model $\tilde{f}(x_i)$ is based on the partial derivative plots or variance of the partial dependence plots and can be interpreted as global feature importance. It is given by

$$I_{derivative,j} = \sqrt{\frac{1}{U-1} \sum_{u=1,\ldots,U} g(x_{u,j}) - \frac{1}{U} \sum_{u=1,\ldots,U} g^2(x_{u,j})}$$

$$I_{partial,j} = \sqrt{\frac{1}{U-1} \sum_{u=1,\ldots,U} \left( (g_j(x_{i,j}) + \theta_{i,j}^*) x_{i,j} \right) - \frac{1}{U} \sum_{u=1,\ldots,U} \left( (g_j(x_{i,j}) + \theta_{i,j}^*) x_{i,j} \right)^2}$$

where $U$ gives the number of unique feature values for feature $j$: $x_{u,j}, u = 1,...,U$,

which provide global feature importance (i.e., how important are certain feature for the AI model in general) as well as global partial dependence plots and derivative plots especially at least one of:

a global partial dependance plot $g_j(x_{i,j})x_{i,j}$
representing the decision of the analysis model in partial dependence of the feature, i.e., quantifying the sensitivity of the model with respect to the individual features, and global partial derivative plots $g_j(x_{i,j})$
representing the impact of marginal feature changes on the model,

Hence, with only one model, i.e., the explanation model $f(x_i)$ we have combined the local perspective of local additive feature attribution methods, such as SHAP or LIME with a consistent global interpretation, such as partial dependence plots (PDP) or Feature Importance (FI) Scores in a unified way.

This framework also allows for a probabilistic interpretation. I.e., it is possible to compute confidence intervals for the partial dependence and derivative plots etc.

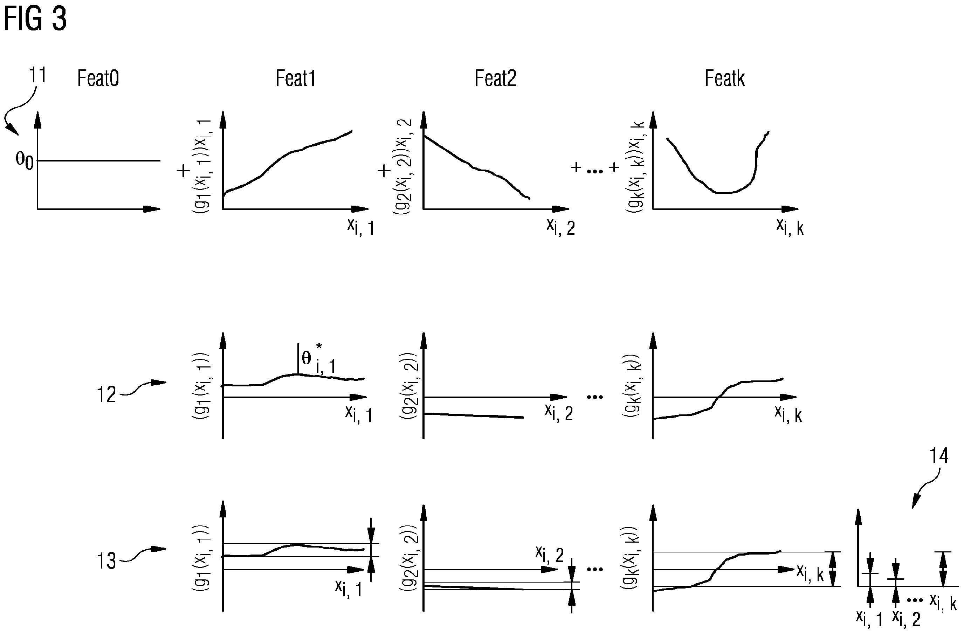

Fig.3 shows partial dependence plots 11 providing global explanations for each feature Feat1, Feat2,..., Featk. The partial dependence plot 20 for Feat0 represents $\theta_0$ and is constant for all observations, i.e., all $x_{i,j}$. The partial dependence plots 20 for the each feature Feat1,..., Featk are depicted in the same line.

Local explanations are provided by partial derivative plots 12 provided for all features Feat1, Feat2,..., Featk. Random effects $\theta_{i,1}^*$, as depicted for Feat1 quantify local deviations from the global pattern.

The feature importance can be derived from the variance of the partial derivative plots 13 and is marked by arrows between the lines representing the minimum and maximum value in the respective plot. The feature importance 14 is also depicted separately in a diagram.

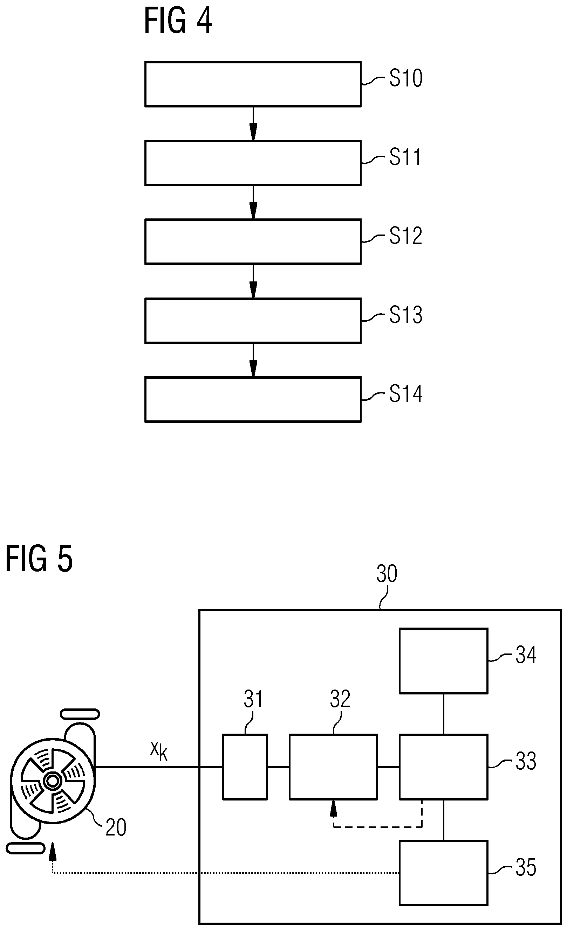

Fig. 4 shows an embodiment of a computer-implemented method for monitoring a machine in form of a flow chart. In a first step S10 at least one collected datapoint $x_k$ is received. Each collected datapoint $x_k$ comprising multivariate sensor data collected at the machine. Each collected datapoint $x_k$ is structured as a multi-dimensional vector with each element of the vector $x_{kj}$ representing a feature of the machine. Preferably, the machine is one of a device in a manufacturing plant, especially a printer in an additive manufacturing plant, a device of a distribution system, a drive unit of a train or a machine in heavy industry, especially a pump, a turbine, a casting machine.

In the next step S11 an operating state of the machine is estimated for the collected datapoint $x_k$ by the output $y_k$ generated by an analysis model $f(x_k)$ with the collected datapoints as input. The at least one collected datapoint $x_k$ is input into an explanation model $\tilde{f}(.)$ trained as described above and shown in Fig.1, see step S12. At least, a local importance of at least one feature $\theta_{k,j}$ is output at the collected datapoint $x_k$, and/or a global importance of at least one feature $\theta_{k,j}$ is output for evaluating and adapting the at least one setting of the machine depending on the features with the highest local importance, see S14.

In an embodiment, a mismatch of the output global importance of at least one feature of the explanation model determining with the actual output of the analysis model and/or expected behavior of the machine is determined with respect to the at least one feature, and the analysis model is re-trained with new training data which represent the actual and/or expected behavior of the machine with respect to the at least one feature. The analysis model is exchanged by the re-trained analysis model, and the operating state of the machine is estimated by the re-trained analysis model.

Fig. 5 shows an embodiment of the assistance apparatus 30 for monitoring a machine 20. The assistance apparatus 30 comprises a data interface 31, an estimator unit 32, an explanation unit 33 and a user interface 34. The assistance apparatus 30 consists of at least one processor configured to provide the functionalities of the described interfaces and units.

The monitored machine 20 is one of a device in a manufacturing plant, especially a printer in an additive manufacturing plant, a device of a distribution system, a drive unit of a train or a machine in heavy industry, especially a pump, a turbine, a casting machine. At least one sensor is attached to the machine and measures parameters, here also called features, like temperature, pressure which are directly measured by a sensor or parameters/features derived from several sensors, like consumed power.

The data interface 31 is configured to receive at least one collected datapoint $x_k$ comprising multivariate sensor data collected at the machine 20, each collected datapoint is structured as a multi-dimensional vector and each element of the vector $x_{kj}$ representing a feature of the machine 20.

The estimator unit 32 is configured to estimate an operating state of the machine 20 for the collected datapoint $x_k$ by an output $y_k$ generated by an analysis model $f(x_k)$ with the at least one received datapoint $x_k$ as input.

The explanation unit 33 is configured to input the at least one collected datapoint $x_k$ into an explanation model $\tilde{f}(.)$ trained as described above.

The user interface 34 is configured to output a local importance of at least one feature $\theta_{k,j}$ at the collected datapoint $x_k$, and a global importance of at least one feature $\theta_{k,j}$ for evaluating. Preferably, the user interface 34 is structured as a graphical user interface providing a display for displaying the local importance of at least one feature at the collected datapoint $x_k$, and a global importance of at least one feature for evaluation by a user. The user interface 34 is configured to receive input from a user.

In an embodiment the explanation unit 33 provides an adaption to parameters of the analysis model $f(x_k)$ in the estimator unit 32 based on the local and/or global importance calculated by the explanation model $\tilde{f}(.))$ in the explanator unit, see dashed arrow in Fig.5.

The assistance apparatus further comprises a control unit 35 configured to adapt at least one setting of the machine 20 depending on the features $\theta_{k,j}$ with the highest local importance, see dotted arrow in Fig.5.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

**Claims**

1. Computer-implemented method for training a local and global interpretable explanation model for explaining an output of an analysis model ($f(.)$) analyzing a machine, comprising

   - receiving (S1) a multitude of datapoints ($x_i$) and associated label ($y_i$), outputted by the analysis model $f(.))$ for the datapoint ($x_i$), the datapoint ($x_i$) comprising multivariate sensor data collected at the machine, each datapoint is structured as a multi-dimensional vector and each element of the vector ($x_{ij}$) representing a feature ($\theta_{i,j}$) of the machine,
   - establishing (S2) the explanation model ($\tilde{f}(.)$) structured as generalized additive mixed model GAMM, wherein each additive component $\left(g_j\left(x_{i,j}\right) + \theta_{i,j}^*\right)x_{i,j}$ of the explanation model ($\tilde{f}(.)$) represents a different feature ($\theta_{i,j}$) of the machine,
   - training (S3) the generalized additive mixed model by a weighted restricted maximum likelihood approach resulting in a trained explanation model $\tilde{f}(x_i))$, wherein the trained explanation model ($\tilde{f}(x_i)$) provides

      a local importance of each feature ($\theta_{i,j}$) at a dedicated datapoint ($x_i$), and
      a global importance of each feature ($\theta_{i,j}$) based on a variance of a partial dependence plot (11) or a variance of a partial derivative plot (13) for the feature($\theta_{i,j}$), and

   - outputting (S4) the trained explanation model ($\tilde{f}(x_i)$) to an assistance apparatus which uses the explanation model to monitor the machine.

2. Method according to claim 1, wherein

   the analysis model $f(.))$ is a classification model outputting a probability for a dedicated class the machine is operating in depending on sensor data input to the analysis model $/(.))$, or
   the analysis model $f(.))$ is a regression model outputting a prediction for datapoints relevant for an operation state of the machine.

3. Method according to claim 2, wherein the analysis model $f(.))$ is a Random Forest, a Gradient Boosted Tree or Isolation Forest, or the analysis model $f(.))$ is a Deep Neural Network, especially a Long short-term memory LSTM, a Convolutional Neural Network CNN, a Recurrent Neural Network RNN, a Variational Autoencoder or a Convolutional Autoencoder.

4. Method according to any of the preceding claims, wherein the training (S3) of the explanation model ($\tilde{f}(x_i)$) comprises the steps:

   - determining (S31) distributional properties of the multitude of datapoints ($x_i$),
   - parametrizing (S32) a distribution with the estimated distributional properties,
   - generating (S33) for each received datapoint ($x_i$) a predefined number ($p$) of synthetic datapoints ($z_{i,1},...,z_{i,p}$) randomly sampled according to the parametrized distribution, each synthetic datapoint $z_{i,q} = (z_{i,q,1}, ...,z_{i,q,j}, ...,z_{i,q,k})$ being a multi-dimensional vector providing a random draw for each element j of the vector,
   - determining (S34) a weight for each synthetic datapoint depending on a distance between the received datapoint

$(x_i)$ and the synthetic datapoint $(z_i)$,
- training (S35) the explanation model by the weighted maximum likelihood approach depending on the weighted contribution of the synthetic datapoints to a log-likelihood according to the restricted maximum likelihood procedure (REML).

5. Computer-implemented method according to claim 4, wherein distributional properties of the multitude of datapoints $(x_i)$ are estimated by determining a mean and variance-covariance matrix $\Sigma$ of the multitude of received datapoints $(x_i)$.

6. Computer-implemented method according to claim 4 or 5, wherein the distribution is a multivariate normal distribution.

7. Computer-implemented method according to any of claims 4-6, wherein the weight is determined to exponentially decrease with the distance between the training datapoints $x_i$ and training datapoints $z_i$.

8. Computer-implemented method for monitoring a machine, comprising the steps:

    - receiving (S10) at least one collected datapoint $(x_k)$ comprising multivariate sensor data collected at the machine, each collected datapoint is structured as a multi-dimensional vector and each element of the vector $x_{kj}$ representing a feature $(\theta_{i,j})$ of the machine,
    - estimating (S11) an operating state of the machine for the collected datapoint $(x_k)$ by the output $(y_k)$ generated by an analysis model $f(x_k)$ with the collected datapoints as input,
    - inputting (S12) the at least one collected datapoint $(x_k)$ into an explanation model $\tilde{f}(.)$) trained according to claims 1-7,
    - outputting (S13) a local importance of at least one feature $(\theta_{k,j})$ at the collected datapoint $(x_k)$, and a global importance of at least one feature $(\theta_{k,j})$ for evaluating and adapting the at least one setting of the machine depending on the features $(\theta_{k,j})$ with the highest local importance.

9. Computer-implemented method according to claim 8, wherein

    - determining a mismatch of the output global importance of at least one feature $(\theta_{k,j})$ of the explanation model with the actual output of the analysis model $f(x_k)$ and/or expected behavior of the machine with respect to the at least one feature $(\theta_{i,j})$, and
    - re-training the analysis model $f(x_k)$ with new training data which represent the actual and/or expected behavior of the machine with respect to the at least one feature $(\theta_{i,j})$,
    - exchange the analysis model $f(x_k)$ by the re-trained analysis model, and
    - estimate the operating state of the machine by the re-trained analysis model.

10. Method according to claim 8 or 9, wherein the machine is one of a device in a manufacturing plant, especially a printer in an additive manufacturing plant, a device of a distribution system, a drive unit of a train or a machine in heavy industry, especially a pump, a turbine, a casting machine.

11. Assistance Apparatus (30) for monitoring a machine (20), comprising:

    - a data interface (31) configured to receive at least one collected datapoint $(x_k)$ comprising multivariate sensor data collected at the machine (20), each collected datapoint $(x_k)$ is structured as a multi-dimensional vector and each element of the vector $(x_{kj})$ representing a feature $(\theta_{i,j})$ of the machine (20),
    - an estimator unit (32) configured to estimate an operating state of the machine (20) for the collected datapoint $(x_k)$ by an output $(y_k)$ generated by an analysis model $(f(x_k))$ with the at least one received datapoint $(x_k)$ as input,
    - an explanation unit (33) configured
    to input the at least one collected datapoint $(x_k)$ into an explanation model $\tilde{f}(.)$) trained according to claims 1-7, and
    - a user interface (34) configured to output a local importance of at least one feature $(\theta_{k,j})$ at the collected datapoint $(x_k)$, and a global importance of at least one feature $(\theta_{k,j})$ for evaluating.

12. Apparatus according to claim 10, comprising a control unit (35) configured to adapt at least one setting of the machine (20) depending on the features $(\theta_{k,j})$ with the highest local importance.

13. A computer program product directly loadable into the internal memory of a digital computer, comprising software code portions for performing the steps of claims 1 to 7 when said product is run on said digital computer.

**14.** A computer program product directly loadable into the internal memory of a digital computer, comprising software code portions for performing the steps of claims 8 and 9 when said product is run on said digital computer.

## FIG 1

| | |
|---|---|
| (x1, y1), ..., (xi, yi), ... | S1 |

$\tilde{f}(.)$ — S2

S31
S32
S33 — S3
S34
S35

Out $\tilde{f}(x_i)$ — S4

## FIG 2

10

| i | q | Feat 1 | Feat 2 | $\cdots$ | Feat k | $\tilde{y}$ |
|---|---|---|---|---|---|---|
| 1 | 0 | $x_{1,1}$ | $x_{1,2}$ | $\cdots$ | $x_{1,k}$ | $f(x_1)$ |
| 1 | 1 | $z_{1,1,1}$ | $z_{1,1,2}$ | $\cdots$ | $z_{1,1,k}$ | $f(z_{1,1})$ |
| $\cdots$ | $\cdots$ | $\cdots$ | $\cdots$ | $\cdots$ | $\cdots$ | $\cdots$ |
| 1 | p | $z_{1,p,1}$ | $z_{1,p,2}$ | $\cdots$ | $z_{1,p,k}$ | $f(z_{1,p})$ |
| 2 | 0 | $x_{2,1}$ | $x_{2,2}$ | $\cdots$ | $x_{2,k}$ | $f(x_2)$ |
| $\cdots$ | $\cdots$ | $\cdots$ | $\cdots$ | $\cdots$ | $\cdots$ | $\cdots$ |
| 2 | p | $z_{2,p,1}$ | $z_{2,p,2}$ | $\cdots$ | $z_{2,p,k}$ | $f(z_{2,p})$ |
| $\cdots$ | $\cdots$ | $\cdots$ | $\cdots$ | $\cdots$ | $\cdots$ | $\cdots$ |
| n | 0 | $x_{n,1}$ | $x_{n,2}$ | $\cdots$ | $x_{n,k}$ | $f(x_n)$ |
| $\cdots$ | $\cdots$ | $\cdots$ | $\cdots$ | $\cdots$ | $\cdots$ | $\cdots$ |
| n | p | $z_{n,p,1}$ | $z_{n,p,2}$ | $\cdots$ | $z_{n,p,k}$ | $f(z_{n,p})$ |

FIG 3

FIG 4

FIG 5

Europäisches
Patentamt

European
Patent Office

Office européen
des brevets

# EUROPEAN SEARCH REPORT

**Application Number**

EP 22 21 1466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEBASTIAN BORDT ET AL: "From Shapley Values to Generalized Additive Models and back", ARXIV.ORG, CORNELL UNIVERSITY LIBRARY, 201 OLIN LIBRARY CORNELL UNIVERSITY ITHACA, NY 14853, 4 November 2022 (2022-11-04), XP091360071, * Abstract; Sections 3, 4; Appendix B, H, I; figure 2 * | 1-14 | INV. G06N5/045 |

-----

**TECHNICAL FIELDS SEARCHED (IPC)**

G06N

The present search report has been drawn up for all claims

| Place of search | Date of completion of the search | Examiner |
|---|---|---|
| The Hague | 3 May 2023 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                         

& : member of the same patent family, corresponding document

EPO FORM 1503 03.82 (P04C01)